# EUROPEAN PATENT APPLICATION

(11) **EP 4 825 484 A1**
(43) Date of publication of application: **21.10.2026**
(21) Application number: 24903776.3
(22) Date of filing: 12.12.2024
(51) Int. Cl.: B01J 20/04, B32B 27/00, C09J 7/38, C09J 11/04, C09J 201/00, E04F 13/07

(54) **CARBON-DIOXIDE-FIXING SURFACE COATING MATERIAL, SURFACE COATING METHOD FOR CIVIL ENGINEERING STRUCTURE AND BUILDING STRUCTURE, CIVIL ENGINEERING STRUCTURE, AND BUILDING STRUCTURE**

(30) Priority: 13.12.2023 JP 2023210366
(71) Applicant: Sekisui Chemical Co., Ltd., Osaka-shi, Osaka 530-8565 (JP)
(72) Inventor: SAKON, Takaaki, Hasuda-shi, Saitama 349-0198 (JP); KAJI, Shouji, Hasuda-shi, Saitama 349-0198 (JP); SAKAI, Takahiro, Nasushiobara-shi, Tochigi 329-2746 (JP)
(74) Representative: Ter Meer und Partner mbB
(86) International application number: PCT/JP2024/044107
(87) International publication number: WO 2025/127123

(57) **Abstract**

A carbon dioxide-fixing surface covering material (10) of the present invention comprises a pressure-sensitive adhesive layer (11), the carbon dioxide-fixing surface covering material (10) being configured to be attached to a surface of a civil engineering structure or a building structure and to absorb and fix atmospheric carbon dioxide. A surface coating method of the present invention comprises attaching the carbon dioxide-fixing surface covering material (10) of the present invention to the surface of the civil engineering structure or the building structure. Another surface coating method of the present invention comprises attaching a carbon dioxide-fixing surface covering material of the present invention, composed of a pressure-sensitive adhesive layer, to a surface of a civil engineering structure or a building structure; and attaching a substrate to a surface of the carbon dioxide-fixing surface covering material attached to the civil engineering structure or the building structure. The civil engineering structure and the building structure of the present invention have the carbon dioxide-fixing surface covering material of the present invention attached thereto.

## Description

### Technical Field

The present invention relates to a carbon dioxide-fixing surface covering material, a surface coating method for a civil engineering structure and a building structure, a civil engineering structure, and a building structure.

### Background Art

Since the Industrial Revolution, the use of fossil fuels has increased, and consequently, the concentration of atmospheric carbon dioxide has also risen. Atmospheric carbon dioxide accelerates global warming; therefore, a reduction in carbon dioxide emissions is desired to suppress an increase in the concentration of atmospheric carbon dioxide. In addition to the reduction in carbon dioxide emissions, a method for reducing the concentration of atmospheric carbon dioxide includes a method of absorbing atmospheric carbon dioxide. Examples of the method of absorbing atmospheric carbon dioxide include a method of applying a water-glass paint composition having the ability to absorb carbon dioxide to an object to be applied (see PTL 1). A coating film formed by applying the water-glass paint composition to the object to be applied absorbs carbon dioxide and forms polymerized silicic acid. As a result, the coating film is capable of absorbing atmospheric carbon dioxide.

### Citation List

### Patent Literature

PTL 1: WO 2012/077344 A

### Summary of Invention

### Technical Problem

However, when a coating film that absorbs atmospheric carbon dioxide is to be formed using the water-glass paint composition described in PTL 1, a certain amount of time is required for applying the paint. Additionally, the penetration depth of the paint is not uniform, therefore causing a problem in that the amount of carbon dioxide absorbed is not constant.

Accordingly, it is an object of the present invention to provide a carbon dioxide-fixing surface covering material capable of easily and efficiently forming a film that absorbs atmospheric carbon dioxide; a surface coating method for a civil engineering structure and a building structure using the carbon dioxide-fixing surface covering material; and a civil engineering structure and a building structure involving use of the carbon dioxide-fixing surface covering material.

### Solution to Problem

The present inventors, as a result of diligent studies, have found that the above-described object can be achieved by attaching a pressure-sensitive adhesive tape that absorbs atmospheric carbon dioxide, instead of applying a paint that absorbs atmospheric carbon dioxide, and thus have completed the present invention.

The present invention provides the following [1] to [12].
[1] A carbon dioxide-fixing surface covering material, comprising
   a pressure-sensitive adhesive layer,
   wherein the carbon dioxide-fixing surface covering material is configured to be attached to a surface of a civil engineering structure or a building structure and to absorb and fix atmospheric carbon dioxide.
[2] The carbon dioxide-fixing surface covering material according to claim 1, wherein, when an amount of carbon dioxide absorbed by the carbon dioxide-fixing surface covering material is measured according to a carbon dioxide absorption measurement method, the amount of carbon dioxide absorbed per unit volume of the carbon dioxide-fixing surface covering material at 24 hours after the start of measurement is 3 kg/m³ or more:
   <Carbon Dioxide Absorption Measurement Method>
      In an environment of 23°C, a carbon dioxide-fixing surface covering material attached to a SUS plate and CO₂ concentration meter are placed in a desiccator such that the carbon dioxide-fixing surface covering material does not contact an inner surface of the desiccator or the CO₂ concentration meter; after the desiccator is evacuated to -0.040 MPa, carbon dioxide gas cylinder is connected to the desiccator to inject CO₂ into the desiccator until internal pressure of the desiccator reaches 0.000 MPa; CO₂ concentration measured with the CO₂ concentration meter in the desiccator after 10 minutes from start of injection is defined as initial concentration; CO₂ concentration in the desiccator after 24 hours from measurement of the initial concentration is measured with the CO₂ concentration meter, and the amount of carbon dioxide absorbed per unit volume of the carbon dioxide-fixing surface covering material is calculated using equation (1) below: $\begin{matrix}Absorption amount per volume of carbon dioxide - \\ fixing surface covering material\end{matrix} = \frac{{PV}_{d}}{RT} \times Δ D \times 44 \times \frac{1}{{V}_{s}}$ (1)
   where P is standard atmospheric pressure (101,325 Pa); Vd is volume of the desiccator (7 L); R is gas constant (8,310 Pa·L/(K·mol)); T is measurement temperature (296·K); ΔD is difference in concentration (vol%) between initial CO₂ concentration in the desiccator and CO₂ concentration in the desiccator after lapse of 24 hours; and Vs is volume (m3) of the carbon dioxide-fixing surface covering material placed in the desiccator.
[3] The carbon dioxide-fixing surface covering material according to [1] or [2], wherein the pressure-sensitive adhesive layer comprises at least one carbon dioxide-fixing agent.
[4] The carbon dioxide-fixing surface covering material according to [3], wherein the carbon dioxide-fixing agent is a basic compound.
[5] The carbon dioxide-fixing surface covering material according to [3] or [4], wherein the carbon dioxide-fixing agent is a hydroxide of an alkaline earth metal.
[6] The carbon dioxide-fixing surface covering material according to any one of [3] to [5], wherein the carbon dioxide-fixing agent is calcium hydroxide.
[7] The carbon dioxide-fixing surface covering material according to any one of [1] to [6], wherein the pressure-sensitive adhesive layer has a thickness of 100 µm or more.
[8] The carbon dioxide-fixing surface covering material according to any one of [1] to [7], wherein the pressure-sensitive adhesive layer is formed of a photocurable resin.
[9] The carbon dioxide-fixing surface covering material according to any one of [1] to [8], wherein the pressure-sensitive adhesive layer is formed of an acrylic pressure-sensitive adhesive.
[10] The carbon dioxide-fixing surface covering material according to any one of [1] to [9], further comprising a substrate.
[11] A surface coating method for a civil engineering structure or a building structure, comprising attaching the carbon dioxide-fixing surface covering material according to any one of [1] to [10] to a surface of the civil engineering structure or the building structure.
[12] The surface coating method according to [11], further comprising attaching a substrate to a surface of the carbon dioxide-fixing surface covering material attached to the civil engineering structure or the building structure, the surface being opposite to a surface facing the civil engineering structure or the building structure.
[13] A civil engineering structure comprising the carbon dioxide-fixing surface covering material according to any one of [1] to [10] attached thereto.
[14] A building structure comprising the carbon dioxide-fixing surface covering material according to any one of [1] to [10] attached thereto.

### Advantageous Effects of Invention

The present invention can provide a carbon dioxide-fixing surface covering material capable of easily and efficiently forming a film that absorbs atmospheric carbon dioxide; a surface coating method for a civil engineering structure and a building structure using the carbon dioxide-fixing surface covering material; and a civil engineering structure and a building structure involving use of the carbon dioxide-fixing surface covering material.

### Brief Description of Drawings

[Fig. 1] Fig. 1 is a schematic diagram illustrating an example of the configuration of a carbon dioxide-fixing surface covering material of the present invention.
[Fig. 2] Fig. 2 is a schematic diagram illustrating an example of the configuration of a carbon dioxide-fixing surface covering material of the present invention.

### Description of Embodiments

### [Carbon Dioxide-Fixing Surface Covering Material]

The carbon dioxide-fixing surface covering material of the present invention includes a pressure-sensitive adhesive layer, the carbon dioxide-fixing surface covering material being configured to be attached to a surface of a civil engineering structure or a building structure and to absorb and fix atmospheric carbon dioxide. Accordingly, the carbon dioxide-fixing surface covering material of the present invention can easily and efficiently form a film that absorbs atmospheric carbon dioxide. Note that to absorb and fix atmospheric carbon dioxide means that the carbon dioxide-fixing surface covering material reacts with atmospheric carbon dioxide to generate a reaction product and retains the reaction product in the carbon dioxide-fixing surface covering material, or that the carbon dioxide-fixing surface covering material adsorbs atmospheric carbon dioxide and retains adsorbed carbon dioxide in the carbon dioxide-fixing surface covering material. Furthermore, the carbon dioxide-fixing surface covering material of the present invention can also suppress deterioration of a civil engineering structure and a building structure caused by ingress of deterioration factors such as chloride ions, thereby contributing to extending the service life of the civil engineering structure and the building structure.

### (Pressure-Sensitive Adhesive Layer)

### <Pressure-Sensitive Adhesive>

The pressure-sensitive adhesive layer is preferably formed of a pressure-sensitive adhesive. The type of pressure-sensitive adhesive is not particularly limited, and examples thereof include an acrylic pressure-sensitive adhesive, a rubber pressure-sensitive adhesive, an urethane pressure-sensitive adhesive, and a silicone pressure-sensitive adhesive. These may be used singly or in combination. Among these, the pressure-sensitive adhesive layer is preferably formed of an acrylic pressure-sensitive adhesive. The use of an acrylic pressure-sensitive adhesive facilitates control of the molecular weight of the pressure-sensitive adhesive, and increases the flexibility of the pressure-sensitive adhesive. This allows the pressure-sensitive adhesive to better conform to surface irregularities of an adherend, making it easier to attach the carbon dioxide-fixing surface covering material to the surface of a civil engineering or building structure.

The pressure-sensitive adhesive layer is preferably formed from a photocurable resin. That is, the pressure-sensitive adhesive layer is preferably formed by photocuring a photocurable pressure-sensitive adhesive composition as described later. By forming the pressure-sensitive adhesive layer from a photocurable resin, the layer can be appropriately cured. In addition, the use of a photocurable resin in the pressure-sensitive adhesive layer facilitates the formation of a thick film having a thickness of 100 µm or more. Such a thick pressure-sensitive adhesive layer can be attached to the surface of a civil engineering or building structure with high adhesive strength, thereby allowing the surface of the civil engineering structure or the building structure to be protected over a long period of time.

The pressure-sensitive adhesive layer is more preferably formed of an acrylic pressure-sensitive adhesive among photocurable resins. Note that for a pressure-sensitive adhesive layer formed from a photocurable resin, a photocurable type may be used as the main polymer constituting the pressure-sensitive adhesive. For example, in the case of an acrylic pressure-sensitive adhesive, the acrylic polymer may be made photocurable.

### (Acrylic Pressure-Sensitive Adhesive)

The acrylic pressure-sensitive adhesive is a pressure-sensitive adhesive that contains an acrylic polymer obtained by polymerizing polymerizable monomers including a (meth)acrylic acid alkyl ester monomer (A).

In this specification, the term "(meth)acrylic acid alkyl ester" refers to a concept including both an acrylic acid alkyl ester and a methacrylic acid alkyl ester; the same applies to other similar terms. The term "polymerizable monomer" refers to a concept that includes not only compounds having no repeating unit, but also compounds where the monomer itself has a repeating unit, such as an olefin polymer (C) described later, as long as the compound is copolymerizable with the (meth)acrylic acid alkyl ester monomer (A).

### ((Meth)acrylic acid Alkyl Ester Monomer (A))

The (meth)acrylic acid alkyl ester monomer (A) is an ester of (meth)acrylic acid and an aliphatic alcohol, and preferably an alkyl ester derived from an aliphatic alcohol whose alkyl group has 2 to 14 carbon atoms, more preferably 4 to 10 carbon atoms. When the number of carbon atoms in the alkyl group falls within this range, the adhesive strength can be more readily increased, and the storage modulus of the pressure-sensitive adhesive at 23°C, which will be described later, can be easily adjusted to a desired range.

Specific examples of the (meth)acrylic acid alkyl ester monomer (A) include ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, iso octyl (meth)acrylate, nonyl (meth)acrylate, decyl (meth)acrylate, undecyl (meth)acrylate, dodecyl (meth)acrylate, tridecyl (meth)acrylate, and tetradecyl (meth)acrylate.

Among these, n-butyl (meth)acrylate, hexyl (meth)acrylate, heptyl (meth)acrylate, 2-ethylhexyl (meth)acrylate, and n-octyl (meth)acrylate are preferred, and 2-ethylhexyl (meth)acrylate is more preferred.

The (meth)acrylic acid alkyl ester monomers may be used singly or in combination of two or more.

The structural unit derived from the (meth)acrylic acid alkyl ester monomer (A) constitutes the main component of the pressure-sensitive adhesive layer, and the content thereof is generally 30 mass% or more, preferably 40 mass% or more, and more preferably 50 mass% or more, based on the total mass of the pressure-sensitive adhesive layer. Increasing the content of the (meth)acrylic acid alkyl ester monomer (A) in this manner makes it possible to impart desired adhesive strength to the pressure-sensitive adhesive layer. Furthermore, the content of the structural unit derived from the (meth)acrylic acid alkyl ester monomer (A) is, for example, 95 mass% or less, preferably 90 mass% or less, and more preferably 80 mass% or less, in order to allow other components to be contained in a certain amount or more.

Note that the content of the structural unit derived from the (meth)acrylic acid alkyl ester monomer (A) in the pressure-sensitive adhesive layer is substantially the same as the content of the (meth)acrylic acid alkyl ester monomer (A) in the pressure-sensitive adhesive composition described later; therefore, they can be expressed interchangeably. The same applies to components other than component (A), such as components (B) and (C) described below.

### (Polar Group-Containing Vinyl Monomer (B))

The polymerizable monomer preferably contains a polar group-containing vinyl monomer (B) in addition to the (meth)acrylic acid alkyl ester monomer (A). The polar group-containing vinyl monomer (B) is a monomer having a polar group and a vinyl group. The use of the polar group-containing monomer (B) facilitates enhancement in adhesive strength to an adherend.

Examples of the polar group-containing vinyl monomer (B) include a vinyl ester of carboxylic acid such as vinyl acetate; a vinyl group-containing carboxylic acid and an anhydride thereof, such as (meth)acrylic acid and itaconic acid; a hydroxyl group-containing vinyl monomer such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate; and a nitrogen-containing vinyl monomer such as (meth)acrylonitrile, N-vinylpyrrolidone, N-vinylcaprolactam, N-vinyllaurolactam, (meth)acryloylmorpholine, (meth)acrylamide, dimethyl(meth)acrylamide, N-methylol(meth)acrylamide, N-butoxymethyl(meth)acrylamide, and dimethylaminomethyl (meth)acrylate.

From the viewpoint of adhesion to a steel structure, among these, a vinyl group-containing carboxylic acid and an anhydride thereof, such as (meth)acrylic acid and itaconic acid, and a nitrogen-containing vinyl monomer such as (meth)acryloylmorpholine are preferred; (meth)acrylic acid and (meth)acryloylmorpholine are more preferred, and acrylic acid is still more preferred. Similarly, from the viewpoint of adhesion to a concrete structure, among these, a nitrogen-containing vinyl monomer such as (meth)acryloylmorpholine is preferred; (meth)acryloylmorpholine is more preferred; and acryloylmorpholine (ACMO) is still more preferred. These polar group-containing vinyl monomers (B) may be used singly or in combination of two or more.

In the case of using the polar group-containing vinyl monomer (B), the content of the structural unit derived from the polar group-containing vinyl monomer (B) in the pressure-sensitive adhesive layer is, based on 100 parts by mass of the structural unit derived from the (meth)acrylic acid alkyl ester monomer (A), preferably from 1 to 20 parts by mass, more preferably from 1 to 15 parts by mass, still more preferably from 2 to 15 parts by mass, even more preferably from 2 to 12 parts by mass, yet more preferably from 3 to 12 parts by mass, and particularly preferably from 3 to 10 parts by mass. By setting the content of the polar group-containing vinyl monomer (B) within such a range, the adhesive strength of the carbon dioxide-fixing surface covering material can be easily enhanced.

### (Olefin Polymer (C))

The polymerizable monomer preferably further contains an olefin polymer (C) having a polymerizable bond at one terminal thereof. The use of such an olefin polymer (C) facilitates enhancement in the adhesive strength of the carbon dioxide-fixing surface covering material.

Note that the polymerizable bond means an unsaturated carbon-carbon bond capable of polymerizing with the polymerizable monomer, and examples thereof include an unsaturated double bond, preferably a (meth)acryloyl group.

Examples of the olefin polymer (C) include a polyolefin having a (meth)acryloyl group at one terminal thereof. Note that the polyolefin refers to a polymer of an aliphatic hydrocarbon compound having a double bond, such as ethylene, propylene, butane, butadiene, and isoprene, or a hydrogenated product thereof.

Examples of the polyolefin having a (meth)acryloyl group at one terminal thereof include a polyethylene having a (meth)acryloyl group at one terminal thereof, which is prepared by causing a reaction of a polyethylene having an epoxy group at one terminal thereof with (meth)acrylic acid. Another example includes a polybutadiene having a (meth)acryloyl group at one terminal thereof or a hydrogenated product thereof; a commercial product thereof includes "L-1253", available from Kuraray Co., Ltd.

The number-average molecular weight of the olefin polymer (C) is preferably from 500 to 20,000, and more preferably from 1,000 to 10,000. Note that the number-average molecular weight may be measured by gel permeation chromatography (GPC) and calculated using a calibration curve of standard polystyrene.

In the pressure-sensitive adhesive layer, the content of the structural unit derived from the olefin polymer (C) is preferably from 1 to 20 parts by mass, more preferably from 2 to 15 parts by mass, and still more preferably from 4 to 12 parts by mass, based on 100 parts by mass of the structural unit derived from the (meth)acrylic acid alkyl ester monomer (A).

### (Crosslinking Agent (D))

The polymerizable monomer preferably further contains a crosslinking agent. Examples of the crosslinking agent include a multifunctional monomer having two or more vinyl groups, preferably multifunctional (meth)acrylate having two or more (meth)acryloyl groups. The use of a multifunctional monomer facilitates adjusting the adhesive strength of the pressure-sensitive adhesive layer to an appropriate range.

The multifunctional (meth)acrylate is not particularly limited, and examples thereof include bifunctional alkyl (meth)acrylate such as hexanediol di(meth)acrylate, 1,9-nonanediol di(meth)acrylate, 1,10-decanediol di(meth)acrylate, or neopentyl glycol di(meth)acrylate; ethoxylated bisphenol A di(meth)acrylate; tris(2-hydroxyethyl) isocyanurate triacrylate; ethoxylated trimethylolpropane triacrylate; propoxylated trimethylolpropane triacrylate; propoxylated glyceryl triacrylate; neopentyl glycol adipate diacrylate; and a polymer such as polyethylene glycol di(meth)acrylate, polypropylene glycol di(meth)acrylate, and liquid hydrogenated 1,2-polybutadiene di(meth)acrylate. Among these multifunctional (meth)acrylates, a polymer is preferred, and liquid hydrogenated 1,2-polybutadiene diacrylate is more preferred. A commercial product of the liquid hydrogenated 1,2-polybutadiene diacrylate includes "TEAI-1000", available from Nippon Soda Co., Ltd. A bifunctional alkyl (meth)acrylate is also preferred, and a commercial product thereof includes A-HD-N in the NK Ester series, available from Shin-Nakamura Chemical Co., Ltd.

In the pressure-sensitive adhesive layer, the content of the structural unit derived from the crosslinking agent is preferably from 0.005 to 1 parts by mass, more preferably from 0.01 to 0.1 parts by mass, and still more preferably from 0.02 to 0.08 parts by mass, based on 100 parts by mass of the structural unit derived from the (meth)acrylic acid alkyl ester monomer (A).

### (Tackifier Resin)

The acrylic pressure-sensitive adhesive may contain a tackifier resin from the viewpoint of enhancing adhesive strength. The tackifier resin is preferably a tackifier resin with low polymerization inhibition, such as a hydrogenated terpene resin, a hydrogenated rosin, a disproportionated rosin resin, or a petroleum resin. Among these, hydrogenated types are preferred, and hydrogenated petroleum resins are particularly preferred, because a tackifier resin having many double bonds inhibits the polymerization reaction.

The softening point of the tackifier resin may be approximately 95°C or more from the viewpoint of enhancing the cohesive strength and the adhesive strength of the pressure-sensitive adhesive. However, the pressure-sensitive adhesive preferably includes a tackifier resin having a softening point of 120°C or more; for example, a tackifier resin having a softening point of 95°C or more and less than 120°C may be used in combination with one having a softening point of 120°C or more and 150°C or less. Note that the softening point may be measured by the ring-and-ball method specified in JIS K2207.

The content of the tackifier resin in the acrylic pressure-sensitive adhesive is, based on 100 parts by mass of the structural unit derived from the (meth)acrylic acid alkyl ester monomer (A), preferably from 5 to 40 parts by mass, more preferably from 7 to 35 parts by mass, and still more preferably from 10 to 25 parts by mass.

### (Fine Particle)

The acrylic pressure-sensitive adhesive may contain fine particles. The incorporation of fine particles can enhance the adhesive strength.

Examples of the fine particles include inorganic hollow particles such as glass balloons, shirasu balloons, and fly ash balloons; organic hollow particles composed of polymethyl methacrylate, acrylonitrile-vinylidene chloride copolymers, polystyrene, and phenolic resins; inorganic fine particles such as glass beads, silica beads, and synthetic mica; and organic fine particles such as polyethyl acrylate, polyurethanes, polyethylene, and polypropylene.

The content of the fine particles in the acrylic pressure-sensitive adhesive is, based on 100 parts by mass of the structural unit derived from the (meth)acrylic acid alkyl ester monomer (A), preferably from 0.1 to 15 parts by mass, more preferably from 0.5 to 10 parts by mass, and still more preferably from 0.7 to 7 parts by mass.

### (Other Components)

The acrylic pressure-sensitive adhesive used for the pressure-sensitive adhesive layer may contain, in addition to the aforementioned components, various additives conventionally used in the pressure-sensitive adhesive, such as a plasticizer, a softener, a pigment, a dye, a polymerization initiator, a fire retardant, and a thickener.

### (Rubber Pressure-Sensitive Adhesive)

Next, the rubber pressure-sensitive adhesive used for the pressure-sensitive adhesive layer will be described. The rubber pressure-sensitive adhesive contains a rubber component and a tackifier resin. As the rubber component, a styrene-isoprene block copolymer is preferably used. The diblock content of the styrene-isoprene block copolymer is preferably from 25 to 70% by mass, more preferably from 30 to 65% by mass, and still more preferably from 45 to 60% by weight. As used herein, the "diblock" refers to a diblock composed of styrene and isoprene. By setting the diblock content within the above range, the adhesive strength can be easily increased. Note that the styrene-isoprene block copolymer contains not only a diblock structure but also a structure having three or more blocks, such as a triblock composed of a styrene block, an isoprene block, and a styrene block.

The styrene content in the styrene-isoprene block copolymer is not particularly limited, but is preferably from 14 to 24% by mass, and more preferably from 15 to 18% by mass. When the styrene content is 14% by mass or more, the pressure-sensitive adhesive tends to have high cohesiveness. On the other hand, when the content is 24% by mass or less, the cohesive strength becomes an appropriate level, making it easier to exhibit adhesive strength.

The molecular weight of the styrene-isoprene block copolymer is not particularly limited, but the mass-average molecular weight is preferably from 100,000 to 400,000, and more preferably from 150,000 to 250,000. Note that the mass-average molecular weight herein refers to a molecular weight measured as a polystyrene-equivalent molecular weight by gel permeation chromatography (GPC).

As the tackifier resin used in the rubber pressure-sensitive adhesive, various tackifier resins can be used; however, petroleum resins, terpene resins, and coumarone resins are preferably used. Tackifier resins may be used singly or in combination of two or more. A petroleum resin is preferably used in combination with at least one selected from the group consisting of terpene resins and coumarone resins. Such a combination of tackifier resins facilitates achieving good adhesive strength.

Examples of the petroleum resins include aliphatic petroleum resins (C5-based petroleum resins), alicyclic petroleum resins, and aromatic petroleum resins. From the viewpoint of compatibility with the styrene-isoprene block copolymer, aliphatic petroleum resins are preferred. Furthermore, a petroleum resin having a softening point of approximately 90 to 120°C is preferably used.

The terpene resin that can be used has a softening point of approximately 80 to 120°C, but a terpene resin having a softening point of less than 100°C is preferred from the viewpoint of ensuring adhesive strength. Additionally, the softening point of the coumarone resin used is preferably from 110 to 130°C, and more preferably from 115 to 125°C to ensure cohesive strength.

The amount of the tackifier resin is preferably from 60 to 250 parts by mass, more preferably from 100 to 200 parts by mass, and still more preferably from 110 to 180 parts by mass, based on 100 parts by mass of the rubber component. By setting the content of the tackifier resin within the above range, the cohesive strength can be enhanced while imparting an appropriate level of adhesive strength.

In the case of using a petroleum resin in combination with at least one selected from the group consisting of a terpene resin and a coumarone resin, the amount of the petroleum resin is preferably from 50 to 200 parts by mass, more preferably from 60 to 150 parts by mass, and still more preferably from 60 to 110 parts by mass, based on 100 parts by mass of the rubber component. On the other hand, the amount of the terpene resin is preferably from 10 to 70 parts by mass, more preferably from 20 to 60 parts by mass, and still more preferably from 30 to 50 parts by mass, based on 100 parts by mass of the rubber component. Furthermore, the amount of the coumarone resin is preferably from 10 to 60 parts by mass, more preferably from 15 to 50 parts by mass, and still more preferably from 20 to 40 parts by mass, based on 100 parts by mass of the rubber component.

Similarly to the acrylic pressure-sensitive adhesive, the rubber pressure-sensitive adhesive may contain the aforementioned fine particles, and the rubber pressure-sensitive adhesive may also contain a softener, an antioxidant, a filler, or the like, as necessary.

### (Urethane Pressure-Sensitive Adhesive)

The urethane pressure-sensitive adhesive is not particularly limited, and examples thereof include a urethane resin obtained by reaction of at least a polyol with a polyisocyanate compound. Examples of the polyol include a polyether polyol, a polyester polyol, a polycarbonate polyol, and a polycaprolactone polyol. Examples of the polyisocyanate compound include diphenylmethane diisocyanate, tolylene diisocyanate, and hexamethylene diisocyanate. These urethane pressure-sensitive adhesives may be used singly or in combination of two or more.

The urethane pressure-sensitive adhesive that may be used is a urethane resin obtained by reaction of a polyurethane polyol with a multifunctional isocyanate curing agent. Examples of the polyurethane polyol include those obtained by causing a reaction of the polyol with the polyisocyanate compound, or those obtained by reacting a polyol, a polyisocyanate compound, and a chain extender such as a diamine. The multifunctional isocyanate curing agent may be any compound having two or more isocyanate groups, and the above-described isocyanate compound can be used.

In addition to the urethane resin, the urethane pressure-sensitive adhesive may contain fine particles and may further contain a tackifier resin, a softener, an antioxidant, a filler, or the like, as necessary.

### (Silicone Pressure-Sensitive Adhesive)

Examples of the silicone pressure-sensitive adhesive include an addition reaction-type silicone pressure-sensitive adhesive, a peroxide-curable silicone pressure-sensitive adhesive, and a condensation reaction-type silicone pressure-sensitive adhesive. Among these, an addition reaction-type silicone pressure-sensitive adhesive is preferably used from the viewpoint of being curable at a low temperature in a short time. Note that the addition reaction-type silicone pressure-sensitive adhesive cures during the formation of the pressure-sensitive adhesive layer. When an addition reaction-type silicone pressure-sensitive adhesive is used as the silicone pressure-sensitive adhesive, the silicone pressure-sensitive adhesive may contain a catalyst such as a platinum catalyst.

Furthermore, the silicone pressure-sensitive adhesive may contain fine particles and may also be supplemented with a crosslinking agent and various additives to control the adhesive strength.

### (Carbon Dioxide-Fixing Agent)

The pressure-sensitive adhesive layer preferably includes at least one carbon dioxide-fixing agent. This configuration allows the carbon dioxide-fixing surface covering material of the present invention to easily absorb and fix atmospheric carbon dioxide. Examples of the carbon dioxide-fixing agent include amines such as monoethanolamine, methyldiethanolamine, 2-amino-2-methyl-1-propanol, piperazine, and polyethyleneimine; alkaline earth metal hydroxides such as magnesium hydroxide, calcium hydroxide, strontium hydroxide, and barium hydroxide; alkaline earth metal oxides such as magnesium oxide and calcium oxide; alkali metal hydroxides such as lithium hydroxide, sodium hydroxide, and potassium hydroxide; aluminosilicates such as zeolite; mesoporous silica; and silica gel. These carbon dioxide-fixing agents can be used singly or in combination of two or more. Among these carbon dioxide-fixing agents, a basic compound is preferred, an alkaline earth metal hydroxide is more preferred, and calcium hydroxide is still more preferred. Calcium hydroxide is preferably contained in the pressure-sensitive adhesive layer in a particulate form dispersed therein. In the present invention, the use of calcium hydroxide makes it less likely to inhibit the photocurability of the pressure-sensitive adhesive composition, and also enables suppression of a decrease in the pressure-sensitive adhesive performance of the pressure-sensitive adhesive layer caused by the carbon dioxide-fixing agent.

Calcium hydroxide reacts with atmospheric carbon dioxide to form calcium carbonate, and the resulting calcium carbonate is retained in the carbon dioxide-fixing surface covering material. According to the present invention, the use of calcium hydroxide enables efficient fixation of carbon dioxide within the pressure-sensitive adhesive layer.

The content of the carbon dioxide-fixing agent is preferably 5 parts by mass or more with respect to 100 parts by mass of the total content of the pressure-sensitive adhesive components obtained by removing the carbon dioxide-fixing agent from all the components constituting the pressure-sensitive adhesive layer. When the content of the carbon dioxide-fixing agent is 5 parts by mass or more, the ability of the carbon dioxide-fixing surface covering material to absorb carbon dioxide can be sufficiently enhanced. From this viewpoint, the content of the carbon dioxide-fixing agent is more preferably 10 parts by mass or more, and still more preferably 15 parts by mass or more, based on 100 parts by mass of the total content of the pressure-sensitive adhesive components excluding the carbon dioxide-fixing agent. Further, the content of the carbon dioxide-fixing agent is preferably 80 parts by mass or less, based on 100 parts by mass of the total content of the pressure-sensitive adhesive components excluding the carbon dioxide-fixing agent. When the content of the carbon dioxide-fixing agent is 80 parts by mass or less, a decrease in the adhesive strength of the pressure-sensitive adhesive layer and inhibition of photocurability caused by the carbon dioxide-fixing agent can be prevented. From this viewpoint, the content of the carbon dioxide-fixing agent is more preferably 70 parts by mass or less, and still more preferably 60 parts by mass or less, based on 100 parts by mass of the total content of the pressure-sensitive adhesive components excluding the carbon dioxide-fixing agent.

### (Thickness)

The thickness of the pressure-sensitive adhesive layer is preferably 100 µm or more. Increasing the thickness to 100 µm or more can further enhance the adhesive strength of the carbon dioxide-fixing surface covering material. From this viewpoint, the thickness of the pressure-sensitive adhesive layer is more preferably 250 µm or more, still more preferably 300 µm or more, and even more preferably 500 µm or more. The upper limit of the thickness of the pressure-sensitive adhesive layer is not particularly limited, but is, for example, 2,000 µm, preferably 1,200 µm from the viewpoint of obtaining an effect of enhancing an adhesive strength of the carbon dioxide-fixing surface covering material corresponding to the thickness while avoiding a decrease in workability due to an increase in weight.

### (90° Peel Adhesion)

The 90° peel adhesion of the pressure-sensitive adhesive layer to mortar is preferably 5 N/15 mm or more. The pressure-sensitive adhesive layer, when having a 90° peel adhesion of 5 N/15 mm or more, exhibits enhanced adhesion to an adherend such as a civil engineering structure or a building structure. From this viewpoint, the 90° peel adhesion of the pressure-sensitive adhesive layer is more preferably 10 N/15 mm or more, still more preferably 12 N/15 mm or more, and even more preferably 20 N/15 mm or more. The 90° peel adhesion of the pressure-sensitive adhesive layer is preferably as high as possible, but is usually 100 N/15 mm or less. The 90° peel adhesion of the pressure-sensitive adhesive layer can be measured by the method described in Examples below. The 90° peel adhesion of the pressure-sensitive adhesive layer can be adjusted to a desired range by adjusting the composition of the pressure-sensitive adhesive.

### (Storage Modulus)

The storage modulus of the pressure-sensitive adhesive layer at a temperature of 23°C is preferably from 50,000 to 1,000,000 Pa. When the storage modulus at a temperature of 23°C is within the above range, the adhesive strength of the pressure-sensitive adhesive tape tends to increase, thereby facilitating enhancement of the protection performance of the pressure-sensitive adhesive tape for an adherend. From this viewpoint, the storage modulus of the pressure-sensitive adhesive layer at a temperature of 23°C is more preferably from 100,000 to 800,000 Pa, and still more preferably from 200,000 to 700,000 Pa. Note that the storage modulus of the pressure-sensitive adhesive layer at a temperature of 23°C can be measured by the method described in Examples below. The storage modulus of the pressure-sensitive adhesive layer at a temperature of 23°C can be adjusted by the composition of the pressure-sensitive adhesive constituting the pressure-sensitive adhesive layer.

### (Method for Producing Pressure-Sensitive Adhesive Layer)

The following description concerns a case in which the pressure-sensitive adhesive constituting the pressure-sensitive adhesive layer is formed of a photocurable acrylic pressure-sensitive adhesive. However, the pressure-sensitive adhesive can also be produced by a known method when formed of other types of pressure-sensitive adhesives.

The acrylic pressure-sensitive adhesive forming the pressure-sensitive adhesive layer can be obtained by irradiating a photocurable pressure-sensitive adhesive composition containing the polymerizable monomer with light to polymerize the polymerizable monomer. Here, the pressure-sensitive adhesive composition may contain a carbon dioxide-fixing agent and, as necessary, at least one of a tackifier resin, fine particles, and other components.

More specifically, a polymerizable monomer, a carbon dioxide-fixing agent, and a tackifier resin, fine particles and other components which may be blended as necessary, are charged into a reaction vessel such as a glass container and mixed to obtain a pressure-sensitive adhesive composition.

Next, in order to remove dissolved oxygen in the pressure-sensitive adhesive composition, an inert gas such as nitrogen gas is generally supplied to purge the oxygen. The pressure-sensitive adhesive composition is then applied onto a release sheet or onto a substrate such as a resin film, woven fabric, or nonwoven fabric, and the polymerizable monomer is then polymerized by irradiating the coating with light, thereby forming the pressure-sensitive adhesive layer.

The steps from the application or impregnation of the pressure-sensitive adhesive composition to the light irradiation are preferably performed under an inert gas atmosphere or in a state where oxygen is blocked by a film or the like.

In this production method, the pressure-sensitive adhesive composition obtained by mixing the components may be subjected to preliminary polymerization before being applied to the release sheet or the substrate in order to increase the viscosity.

### (Substrate)

The carbon dioxide-fixing surface covering material of the present invention may further include a substrate. When a substrate is provided, the pressure-sensitive adhesive layer is preferably provided on at least one surface side of the substrate. The substrate in the carbon dioxide-fixing surface covering material of the present invention is not particularly limited, and examples thereof include a sheet-like material such as a resin film, a nonwoven fabric, or a metal foil.

Examples of the resin film include an acrylic film, a polyester film such as a PET (polyethylene terephthalate) film, a fluororesin film, a polyvinyl chloride film, an AES resin film, and an ASA resin film.

The nonwoven fabric is, for example, a nonwoven fabric made of synthetic resin fibers such as polyamide-based, polyester-based, polyacrylic-based, polyolefin-based, and polyurethane-based fibers.

Examples of the metal foil include a metal foil of iron or an iron alloy, a metal foil of a metal having a lower potential than iron such as chromium, zinc, titanium, aluminum, or magnesium, and a metal foil of a metal having a higher potential than iron such as gold, silver, copper, tin, nickel, or cobalt.

These sheet-like materials can be used singly or in combination of two or more. From the viewpoint of protecting the pressure-sensitive adhesive layer, the substrate is preferably a resin film, more preferably an acrylic film, a PET film, or a fluororesin film, and still more preferably an acrylic film.

When a resin film is used, the interfacial strength can be easily increased by modifying the surface through corona treatment or by providing an undercoat layer for the substrate.

The thickness of the substrate is not particularly limited, but is preferably from 10 to 500 µm, more preferably from 30 to 400 µm, and still more preferably from 40 to 300 µm. The substrate functions as a support when the thickness thereof is 10 µm or more. In addition, setting the thickness to 500 µm or less makes it easier to enhance adhesion to a civil engineering structure and a building structure.

The surface of the substrate on the side of the pressure-sensitive adhesive layer may be subjected to surface modification by corona treatment, thereby further enhancing the interfacial strength between the substrate and the pressure-sensitive adhesive layer in the carbon dioxide-fixing surface covering material.

### (Total Light Transmittance)

The total light transmittance of the carbon dioxide-fixing surface covering material including a substrate is preferably 30% or more. When the total light transmittance of the carbon dioxide-fixing surface covering material comprising a substrate is 30% or more, the adherend can be visually recognized through the carbon dioxide-fixing surface covering material. From this viewpoint, the total light transmittance of the carbon dioxide-fixing surface covering material including a substrate is more preferably 40% or more, still more preferably 50% or more, and even more preferably 60% or more. The upper limit of the range of the total light transmittance of the carbon dioxide-fixing surface covering material including a substrate is not particularly limited, but it is usually 100% or less. The total light transmittance of the carbon dioxide-fixing surface covering material including a substrate may be measured in accordance with JIS K 7361 by bonding a prescribed release PET to the surface of the carbon dioxide-fixing surface covering material opposite to the surface on which the substrate is provided. Specifically, the total light transmittance of the carbon dioxide-fixing surface covering material including a substrate can be measured by the method described in Examples below. The total light transmittance can be adjusted according to the composition of the pressure-sensitive adhesive forming the pressure-sensitive adhesive layer, the thickness of the pressure-sensitive adhesive layer, the composition of the substrate, the thickness of the substrate, and the like.

### (Undercoat Layer)

The carbon dioxide-fixing surface covering material of the present invention preferably further includes an undercoat layer on the surface of the substrate on the side of the pressure-sensitive adhesive layer. This configuration can further enhance the interfacial strength between the substrate and the pressure-sensitive adhesive layer. The undercoat can be formed by applying an undercoat paint to the substrate and, if necessary, drying the undercoat paint.

### (Coating Film)

The carbon dioxide-fixing surface covering material of the present invention preferably further includes a coating film provided on the surface of the substrate opposite to the surface on the side of the pressure-sensitive adhesive layer. This configuration can further enhance weather resistance of the carbon dioxide-fixing surface covering material of the present invention. The coating film can be formed by applying a paint to the substrate and, if necessary, drying the paint.

When the amount of carbon dioxide absorbed by the carbon dioxide-fixing surface covering material of the present invention is measured according to the following carbon dioxide absorption measurement method, the amount of carbon dioxide absorbed per unit volume of the carbon dioxide-fixing surface covering material of the present invention at 24 hours after the start of measurement is preferably 3 kg/m³ or more.

### <Carbon Dioxide Absorption Measurement Method>

In an environment of 23°C, a carbon dioxide-fixing surface covering material attached to a SUS plate and CO₂ concentration meter are placed in a desiccator such that the carbon dioxide-fixing surface covering material does not contact the inner surface of the desiccator or the CO₂ concentration meter; and then the desiccator is evacuated to -0.040 MPa (gauge pressure). Thereafter, the carbon dioxide gas cylinder is connected to the desiccator to inject CO₂ (component concentration: 99.5 vol% or more) into the desiccator until the internal pressure of the desiccator reaches 0.000 MPa (gauge pressure). In an environment of 23°C, the CO₂ concentration measured with the CO₂ concentration meter in the desiccator after 10 minutes from start of injection is defined as the initial concentration. In an environment of 23°C, the CO₂ concentration in the desiccator after 24 hours from measurement of the initial concentration is measured with the CO₂ concentration meter, and the amount of carbon dioxide absorbed per unit volume of the carbon dioxide-fixing surface covering material is calculated using equation (1) below: Note that the CO₂ concentration meter to be used may be, for example, trade name "High-Concentration Combustible Gas Detector XP-3140", available from New Cosmos Electric Co., Ltd.. $\begin{matrix}Absorption amount per volume of carbon dioxide - \\ fixing surface covering material\end{matrix} = \frac{{PV}_{d}}{RT} \times Δ D \times 44 \times \frac{1}{{V}_{s}}$ (1) where P is standard atmospheric pressure (101,325 Pa); Vd is volume of the desiccator (7 L); R is gas constant (8,310 Pa·L/(K·mol)); T is measurement temperature (296 K); ΔD is difference in concentration (vol%) between initial CO₂ concentration in the desiccator and CO₂ concentration in the desiccator after lapse of 24 hours; and Vs is volume (m3) of the carbon dioxide-fixing surface covering material placed in the desiccator.

When the carbon dioxide-fixing surface covering material includes a substrate, the carbon dioxide-fixing surface covering material attached to a SUS plate and the CO₂ concentration meter are placed in the desiccator in such a manner that the substrate of the carbon dioxide-fixing surface covering material does not contact the inner surface of the desiccator or the CO₂ concentration meter.

When the amount of carbon dioxide absorbed per unit volume of the carbon dioxide-fixing surface covering material is 3 kg/m³ or more, the carbon dioxide-fixing surface covering material exhibits sufficient carbon dioxide absorption capability. From this viewpoint, the amount of carbon dioxide absorbed per unit volume of the carbon dioxide-fixing surface covering material of the present invention is more preferably 10 kg/m³ or more, and still more preferably 18 kg/m³ or more. Although a higher amount of carbon dioxide absorbed per unit volume of the carbon dioxide-fixing surface covering material is preferred, the upper limit thereof is, for example, 500 kg/m³. The amount of carbon dioxide absorbed per unit volume of the carbon dioxide-fixing surface covering material can be adjusted according to the type and content of the carbon dioxide-fixing agent contained in the carbon dioxide-fixing surface covering material.

### (Civil Engineering Structure and Building Structure)

The civil engineering structure and building structure to which the carbon dioxide-fixing surface covering material of the present invention is to be attached are preferably either a concrete structure or a steel structure. By being attached to either a concrete structure or a steel structure, the carbon dioxide-fixing surface covering material can appropriately protect the civil engineering structure or building structure.

The concrete structure and the steel structure refer to various structures that use concrete, reinforcing bars, steel frames, prestressing steel materials, and the like, such as railway or road bridges, tunnels, chimneys, and buildings, and the specific target is not particularly limited.

### (Configuration of Carbon Dioxide-Fixing Surface covering material)

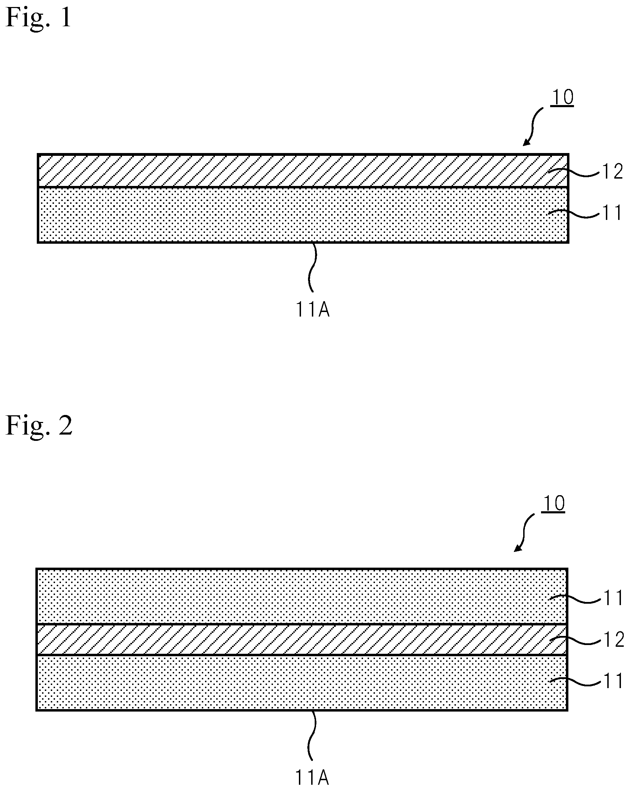

The carbon dioxide-fixing surface covering material may consist of a pressure-sensitive adhesive layer. Alternatively, as shown in Fig. 1, the carbon dioxide-fixing surface covering material 10 may be a single-sided pressure-sensitive adhesive tape including a substrate 12 and a pressure-sensitive adhesive layer 11 provided on one side of the substrate 12. This configuration allows the pressure-sensitive adhesive layer 11 to be protected by the substrate 12.

In each drawing, the carbon dioxide-fixing surface covering material is used by attaching a surface 11A of the pressure-sensitive adhesive layer 11, which serves as the adhesive surface, to a civil engineering structure or a building structure.

When the carbon dioxide-fixing surface covering material consists of a pressure-sensitive adhesive layer, the carbon dioxide-fixing surface covering material is a double sided pressure-sensitive adhesive tape. However, as shown in Fig. 2, even when the carbon dioxide-fixing surface covering material includes a substrate 12, the pressure-sensitive adhesive layer 11 may be provided on both sides of the substrate 12 so that the carbon dioxide-fixing surface covering material 10 functions as a double sided pressure-sensitive adhesive tape.

Furthermore, before the carbon dioxide-fixing surface covering material 10 is attached to an adherend (a civil engineering structure or a building structure), a release sheet (not shown) may be bonded to the surface of the pressure-sensitive adhesive layer 11 that serves as the bonding surface with the adherend. The release sheet is preferably peeled off before the carbon dioxide-fixing surface covering material 10 is attached to the adherend. By providing a release sheet, the bonding surface of the carbon dioxide-fixing surface covering material 10 can be appropriately protected. The release sheet may be formed of a resin film alone, a resin film having one surface subjected to a release treatment, or a release paper.

### (Method of Using Carbon Dioxide-Fixing Surface Covering Material of the Present Invention)

The carbon dioxide-fixing surface covering material of the present invention may be directly attached to a civil engineering structure and a building structure. Preferably, however, the surface of the civil engineering structure and the building structure is coated with the primer paint, and the carbon dioxide-fixing surface covering material of the present invention is attached to the primer layer formed from the primer paint while the primer paint applied to the civil engineering structure and the building structure is in an undried state.

The primer paint preferably contains an epoxy resin. Because the epoxy resin exhibits excellent adhesion to a concrete structure, a high level of concrete spalling-prevention performance can be provided. The epoxy resin preferably has at least two epoxy groups in one molecule and may be obtained, for example, by reaction of a polyhydric alcohol or a polyhydric phenol with a halohydrin. Specific examples thereof include a bisphenol A-type epoxy resin, a halogenated bisphenol A-type epoxy resin, a novolac-type epoxy resin, a polyglycol-type epoxy resin, a bisphenol F-type epoxy resin, an epoxidized oil, 1,6-hexanediol diglycidyl ether, and neopentyl glycol diglycidyl ether. Modified epoxy resins, such as an amine-modified epoxy resin, an isocyanate-modified epoxy resin, an acrylic-modified epoxy resin, a urethane-modified epoxy resin, and a polyester-modified epoxy resin, are also included. These epoxy resins may be used singly or in combination of two or more.

The primer paint may contain other components such as another resin, a curing agent, a pigment, a thickener, a rust inhibitor, a dispersant, a defoaming agent, a leveling agent, a sedimentation inhibitor, a sagging inhibitor, a curing accelerator, an algae-proof agent, a mold-proof agent, a preservative, an ultraviolet absorber, and a light stabilizer as necessary.

The coating method of the primer paint is not particularly limited, and known coating methods such as brush coating, roller coating, trowel coating, spatula coating, flow coater coating, spray coating (e.g., aerosol spray coating, air spray coating, or airless spray coating) may be used.

### [Surface Coating Method for Civil Engineering Structure and Building Structure]

The surface coating method for a civil engineering structure and a building structure of the present invention includes attaching the carbon dioxide-fixing surface covering material of present invention to the surface of the civil engineering structure or the building structure, thereby making the work of enabling the civil engineering structure and the building structure to absorb and fix atmospheric carbon dioxide more efficient. Since the carbon dioxide-fixing surface covering material, the civil engineering structure, and the building structure of the present invention have already been described in the section on the carbon dioxide-fixing surface covering material, further description of the carbon dioxide-fixing surface covering material, the civil engineering structure, and the building structure of the present invention is omitted.

Another surface-coating method for a civil engineering structure or a building structure of the present invention includes attaching the carbon dioxide-fixing surface covering material of the present invention, which is composed of a pressure-sensitive adhesive layer, to a surface of the civil engineering structure or the building structure, and attaching a substrate to a surface of the carbon dioxide-fixing surface covering material attached to the civil engineering structure or the building structure, the surface being opposite to a surface facing the civil engineering structure or the building structure, thereby making the work of enabling the civil engineering structure and the building structure to absorb and fix atmospheric carbon dioxide more efficient. Since the carbon dioxide-fixing surface covering material, the pressure-sensitive adhesive layer, the substrate, the civil engineering structure, and the building structure of the present invention have already been described in the section on the carbon dioxide-fixing surface covering material, further description of the carbon dioxide-fixing surface covering material, the pressure-sensitive adhesive layer, the substrate, the civil engineering structure, and the building structure of the present invention is omitted. However, according to this method, the substrate can be easily changed depending on the type of adherend or the intended use, and, for example, a substrate having a decorative design may be used for decorating the civil engineering structure or the building structure.

In this method, an example has been described in which the carbon dioxide-fixing surface covering material consists of a single pressure-sensitive adhesive layer. However, any carbon dioxide-fixing surface covering material may be used as long as a substrate can be bonded to the surface opposite to the surface bonded to the civil engineering structure or the building structure. For example, a double sided pressure-sensitive adhesive tape in which pressure-sensitive adhesive layers are provided on both sides of a substrate may be used.

### [Civil Engineering Structure and Building Structure]

The civil engineering structure of the present invention is provided with the carbon dioxide-fixing surface covering material of the present invention attached thereto, and the building structure of the present invention is also provided with the carbon dioxide-fixing surface covering material of the present invention attached thereto. Since the carbon dioxide-fixing surface covering material, the civil engineering structure, and the building structure of the present invention have already been described in the section on the carbon dioxide-fixing surface covering material, further description of the carbon dioxide-fixing surface covering material, the civil engineering structure, and the building structure of the present invention is omitted.

### Examples

Hereinafter, the present invention will be described in more detail with reference to Examples, but the present invention is not limited to these Examples.

### [Evaluation Method]

In Examples and Comparative Examples, the carbon dioxide-fixing surface covering material was evaluated by the following evaluation method.

### (Carbon Dioxide Absorption Measurement Method)

A carbon dioxide-fixing surface covering material attached to a SUS plate and a CO₂ concentration meter (trade name "High-Concentration Combustible Gas Detector XP-3140", available from New Cosmos Electric Co., Ltd.) were placed in a desiccator, and the desiccator was evacuated to -0.040 MPa (gauge pressure). During this operation, the carbon dioxide-fixing surface covering material was positioned to avoid contact with the inner surface of the desiccator or the CO₂ concentration meter. Furthermore, in the case of the carbon dioxide-fixing surface covering material including a substrate, the carbon dioxide-fixing surface covering material was positioned so that the substrate surface of the carbon dioxide-fixing surface covering material did not contact the inner surface of the desiccator or the CO₂ concentration meter. Thereafter, a carbon dioxide gas cylinder was connected to the desiccator to inject CO₂ (component concentration: 99.5 vol% or more) into the desiccator until the internal pressure of the desiccator reached 0.000 MPa (gauge pressure). The CO₂ concentration measured with the CO₂ concentration meter in the desiccator after 10 minutes from start of injection was defined as the initial concentration. The CO₂ concentration in the desiccator after 24 hours from measurement of the initial concentration was measured with the CO₂ concentration meter, and the amount of carbon dioxide absorbed per unit volume of the carbon dioxide-fixing surface covering material was calculated using equation (1) below. The evaluation was carried out in an environment of 23°C. $\begin{matrix}Absorption amount per volume of carbon dioxide - \\ fixing surface covering material\end{matrix} = \frac{{PV}_{d}}{RT} \times Δ D \times 44 \times \frac{1}{{V}_{s}}$ (1) where P is standard atmospheric pressure (101,325 Pa); Vd is volume of the desiccator (7 L); R is gas constant (8,310 Pa·L/(K·mol)); T is measurement temperature (296 K); ΔD is difference in concentration (vol%) between initial CO₂ concentration in the desiccator and CO₂ concentration in the desiccator after lapse of 24 hours; and Vs is volume (m3) of the carbon dioxide-fixing surface covering material placed in the desiccator.

### <Evaluation criteria>

A: 18 kg/m³ or more
B: 3 kg/m³ or more
C: less than 3 kg/m³

### (90° Peel Adhesion of Pressure-Sensitive Adhesive Layer)

A film was laminated onto the pressure-sensitive adhesive used in the pressure-sensitive adhesive layer in the carbon dioxide-fixing surface covering material to prepare a measurement sheet of pressure-sensitive adhesive including the film and the pressure-sensitive adhesive layer on one side of the film. The film may be any elongation-resistant film that does not rupture at the film-adhesive interface during adhesive strength measurement. In this measurement, a primer-treated PET film was used. The resulting measurement sheet of pressure-sensitive adhesive was cut into samples with a width of 15 mm and a length of 100 mm. Each of the measurement samples was bonded to a reference mortar plate described below via the pressure-sensitive adhesive layer under the environment of 23°C and 50% RH, followed by curing for 3 days under the environment of 23°C and 50% RH. For bonding to the mortar, a 2-kg roller was passed back and forth twice at a speed of 10 ± 0.5 mm/s. Then, the measurement sample cured for 3 days was fixed to a chuck of a tensile tester (trade name "TENSILON Universal Material Testing Instrument" available from A&D Company, Limited). Thereafter, under the environment of 23°C and 50% RH, the pressure-sensitive adhesive sheet was pulled by 60 mm or more at a peel angle of 90° and a speed of 300 mm/min. The average load (N) detected by the load cell over this interval was recorded and defined as the 90° peel adhesion.

### (Reference Mortar Plate)

A reference mortar plate was prepared as follows.

A mortar plate (in accordance with JIS R 5201, 70 mm wide and 150 mm long) was prepared. Dust adhering to the surface of the prepared mortar plate was removed using curing tape. Specifically, an OPP tape (available from Sekisui Chemical Co., Ltd., trade name "Tough light tape No. 835") was attached to the surface of the mortar plate and then peeled off, after which the OPP tape was attached to the release surface of a release PET (polyethylene terephthalate) film (thickness: 50 µm) to serve as a sample. Dust removal was repeated until the total light transmittance of the sample reached 87%. The mortar plate from which dust had been removed as described above was used as the reference mortar plate, and the 90° peel adhesion of the pressure-sensitive adhesive layer relative to the reference mortar plate was measured.

### (Storage Modulus of Pressure-Sensitive Adhesive Layer)

The storage modulus of the pressure-sensitive adhesive layer was calculated by measuring a dynamic viscoelastic spectrum using DVA-200 (available from IT Keisoku Seigyo K.K.) under the following conditions: shear mode at 10 Hz, strain of 0.1%, temperature range of -50°C to 200°C, and a heating rate of 6°C/min.

### (Total Light Transmittance of Carbon Dioxide-Fixing Surface covering material Including Substrate)

A release PET film (polyethylene terephthalate film: trade name "PET5002", available from Lintec Corporation) was laminated onto the pressure-sensitive adhesive layer of the carbon dioxide-fixing surface covering material including a substrate. Thereafter, the total light transmittance of the carbon dioxide-fixing surface covering material laminated with the release PET was measured in accordance with JIS K 7361 using a haze meter (trade name "Haze Meter NDH4000", available from Nippon Denshoku Industries Co., Ltd.) at 23°C and 50% relative humidity.

### Examples 1, 3, 5, 7, 9, and 11 and Comparative Example 1

Each pressure-sensitive adhesive composition was prepared according to the formulations listed in Tables 1 and 2. The pressure-sensitive adhesive composition was purged with nitrogen to remove dissolved oxygen. Subsequently, the pressure-sensitive adhesive composition was applied onto a release-treated PET film and further covered with another release-treated PET film. In this state, the lamp intensity of a chemical lamp was adjusted to have an ultraviolet irradiation intensity of 0.5 mW/cm², and ultraviolet rays were irradiated for 5 minutes to cure the pressure-sensitive adhesive composition.

Through this procedure, a carbon dioxide-fixing surface covering material including a single pressure-sensitive adhesive layer was obtained. The results are shown in Tables 1 and 2. Note that the carbon dioxide-fixing surface covering material was also evaluated after being peeled from the PET film.

### Examples 2, 4, 6, 8, 10, and 12 to 15 and Comparative Example 2

Each pressure-sensitive adhesive composition was prepared according to the formulations listed in Tables 1 and 2. The pressure-sensitive adhesive composition was purged with nitrogen to remove dissolved oxygen. Subsequently, the pressure-sensitive adhesive composition was applied onto a release-treated PET film and further covered with another release-treated PET film. In this state, the lamp intensity of a chemical lamp was adjusted to have an ultraviolet irradiation intensity of 0.5 mW/cm², and ultraviolet rays were irradiated for 5 minutes to cure the pressure-sensitive adhesive composition.

Next, one of the release-treated PET films was peeled off, and the substrate listed in Tables 1 and 2 was laminated onto the adhesive surface.

Through this procedure, a carbon dioxide-fixing surface covering material composed of the substrate and the pressure-sensitive adhesive layer was obtained. Note that the carbon dioxide-fixing surface covering material was evaluated after the other release-treated PET film is also peeled off. The results are shown in Tables 1 and 2.

**Table 1**

| Item | | | | Example 1 | Example 2 | Example 3 | Example 4 | Example 5 | Example 6 | Comparative Example 1 | Comparative Example 2 |
|---|---|---|---|---|---|---|---|---|---|---|---|
| Formulation | Pressure-sensitive adhesive | 2-Ethylhexyl acrylate | part by mass | 100 | 100 | 100 | 100 | 100 | 100 | 100 | 100 |
| | | Acrylic acid | part by mass | 7 | 7 | 7 | 7 | 7 | 7 | 7 | 7 |
| | | Acryloylmorpholine (ACMO) | part by mass | 0 | 0 | 0 | 0 | 0 | 0 | 0 | 0 |
| | | Olefin polymer | part by mass | 8 | 8 | 8 | 8 | 8 | 8 | 8 | 8 |
| | | Tackifier resin 1 | part by mass | 10 | 10 | 10 | 10 | 10 | 10 | 10 | 10 |
| | | Tackifier resin 2 | part by mass | 10 | 10 | 10 | 10 | 10 | 10 | 10 | 10 |
| | | Crosslinking agent | part by mass | 0.05 | 0.05 | 0.05 | 0.05 | 0.05 | 0.05 | 0.05 | 0.05 |
| | | Polymerization initiator | part by mass | 0.5 | 0.5 | 0.5 | 0.5 | 0.5 | 0.5 | 0.5 | 0.5 |
| | | Carbon dioxide-fixing agent *1 | part by mass | 60 | 60 | 30 | 30 | 15 | 15 | 0 | 0 |
| | Substrate | Acrylic film 1 | - | Not included | Included | Not included | Included | Not included | Included | Not included | Included |
| | | Acrylic film 2 | - | Not included | Not included | Not included | Not included | Not included | Not included | Not included | Not included |
| Basic physical properties | Substrate | Thickness | µm | - | 150 | - | 150 | - | 150 | - | 150 |
| | Pressure-sensitive adhesive layer | Thickness | µm | 600 | 600 | 600 | 600 | 600 | 600 | 600 | 600 |
| | | 90° Peel adhesion (to mortar) at 23°C | N/15mm | 12 | 12 | 19 | 19 | 28 | 28 | 40 | 40 |
| | | Storage modulus at 23°C | Pa | 600,000 | 600,000 | 550,000 | 550,000 | 470,000 | 470,000 | 360,000 | 360,000 |
| | Substrate/pressure-sensitive adhesive laver/PET | Total light transmittance | % | - | 48 | - | 55 | - | 63 | - | 85 |
| Evaluation result | Amount of CO₂ absorbed | | kg/m³ | 20 | 18 | 9.5 | 8.7 | 4.3 | 3.7 | 0 | 0 |
| | Evaluation | | - | A | A | B | B | B | B | C | C |

| | | | | | | | | | | | |
|---|---|---|---|---|---|---|---|---|---|---|---|
| *1 The blend amount of carbon dioxide-fixing agent is per 100 parts by mass of the total amount of pressure-sensitive adhesive components, excluding the carbon dioxide-fixing agent. | | | | | | | | | | | |

**Table 2**

| Item | | | | Example 7 | Example 8 | Example 9 | Example 10 | Example 11 | Example 12, | Example 13 | Example 14 | Example 15 |
|---|---|---|---|---|---|---|---|---|---|---|---|---|
| Formulation | Pressure-sensitive adhesive | 2-Ethylhexyl acrylate | part by mass | 100 | 100 | 100 | 100 | 100 | 100 | 100 | 100 | 100 |
| | | Acrylic acid | part by mass | 0 | 0 | 0 | 0 | 0 | 0 | 0 | 0 | 0 |
| | | Acryloylmorpholine (ACMO) | part by mass | 9 | 9 | 9 | 9 | 9 | 9 | 9 | 9 | 9 |
| | | Olefin polymer | part by mass | 8 | 8 | 8 | 8 | 8 | 8 | 8 | 8 | 8 |
| | | Tackifier resin 1 | part by mass | 10 | 10 | 10 | 10 | 10 | 10 | 10 | 10 | 10 |
| | | Tackifier resin 2 | part by mass | 10 | 10 | 10 | 10 | 10 | 10 | 10 | 10 | 10 |
| | | Crosslinking agent | part by mass | 0.05 | 0.05 | 0.05 | 0.05 | 0.05 | 0.05 | 0.05 | 0.05 | 0.05 |
| | | Polymerization initiator | part by mass | 0.5 | 0.5 | 0.5 | 0.5 | 0.5 | 0.5 | 0.5 | 0.5 | 0.5 |
| | | Carbon dioxide-fixing agent (Ca(OH)2) *1 | part by mass | 60 | 60 | 30 | 30 | 15 | 15 | 60 | 60 | 60 |
| | Substrate | Acrylic film 1 | - | Not included | Included | Not included | Included | Not included | Included | Included | Included | Not included |
| | | Acrylic film 2 | - | Not included | Not included | Not included | Not included | Not included | Not included | Not included | Not included | Included |
| Basic physical properties | Substrate | Thickness | µm | - | 150 | - | 150 | - | 150 | 150 | 150 | 75 |
| | Pressure-sensitive adhesive layer | Thickness | µm | 600 | 600 | 600 | 600 | 600 | 600 | 150 | 800 | 600 |
| | | 90° Peel adhesion (to mortar) at 23°C | N/15mm | 21 | 21 | 33 | 33 | 41 | 41 | 13 | 24 | 65 |
| | | Storage modulus at 23°C | Pa | 400,000 | 400,000 | 340,000 | 340,000 | 270,000 | 270,000 | 450,000 | 390,000 | 180,000 |
| | Substrate/pressure-sensitive adhesive layer/PET | Total light transmittance | % | - | 49 | - | 55 | - | 63 | 72 | 39 | 49 |
| Evaluation result | Amount of CO₂ absorbed | | kg/m³ | 20 | 18 | 9.5 | 8.7 | 4.3 | 3.7 | 15 | 20 | 22 |
| | Evaluation | | - | A | A | B | B | B | B | B | A | A |

| | | | | | | | | | | | | |
|---|---|---|---|---|---|---|---|---|---|---|---|---|
| *1 The blend amount of carbon dioxide-fixing agent is per 100 parts by mass of the total amount of pressure-sensitive adhesive components, excluding the carbon dioxide-fixing agent. | | | | | | | | | | | | |

The respective components in Tables 1 and 2 are as follows.
Olefin polymer: trade name "L-1253", available from Kuraray Co., Ltd., hydrogenated polybutadiene having a (meth)acryloyl group at one terminal
Tackifier resin 1: trade name "Arkon P140", available from Arakawa Chemical Industries, Ltd., hydrogenated petroleum resin having a softening point of 140°C
Tackifier resin 2: trade name "Arkon P100", available from Arakawa Chemical Industries, Ltd., hydrogenated petroleum resin having a softening point of 100°C
Crosslinking agent: NK ester A-HD-N, difunctional alkyl acrylate, available from Shin-Nakamura Chemical Co., Ltd.
Polymerization initiator: 2,2-dimethoxy-2-phenylacetophenone
Acrylic film 1: trade name "Soft Acrylic Sheet", available from Tatsuta Chemical Co., Ltd.
Acrylic film 2: trade name "ACRYPLEN TM MTXA45", available from Mitsubishi Chemical Corporation
Carbon dioxide-fixing agent: calcium hydroxide, Cat. No. 07069-00, available from Kanto Chemical Co., Inc.

By comparing the carbon dioxide-fixing surface covering materials of Examples 1 to 15 with the carbon dioxide-fixing surface covering materials of Comparative Examples 1 and 2, it was found that since the pressure-sensitive adhesive layer contains a carbon dioxide-fixing agent, the carbon dioxide-fixing surface covering material can absorb and fix atmospheric carbon dioxide. Furthermore, from the carbon dioxide-fixing surface covering materials of Examples 2, 4, 6, 8, 10, and 12 to 15, it was found that atmospheric carbon dioxide can be absorbed and fixed even when the carbon dioxide-fixing surface covering material includes a substrate.

### Reference Signs List

10 carbon dioxide-fixing surface covering material
11 pressure-sensitive adhesive layer
12 substrate

## Claims

1. A carbon dioxide-fixing surface covering material, comprising
a pressure-sensitive adhesive layer, the carbon dioxide-fixing surface covering material being configured to be attached to a surface of a civil engineering structure or a building structure and to absorb and fix atmospheric carbon dioxide.

2. The carbon dioxide-fixing surface covering material according to claim 1, wherein, when an amount of carbon dioxide absorbed by the carbon dioxide-fixing surface covering material is measured according to a carbon dioxide absorption measurement method described below, the amount of carbon dioxide absorbed per unit volume of the carbon dioxide-fixing surface covering material at 24 hours after the start of measurement is 3 kg/m³ or more:
<Carbon Dioxide Absorption Measurement Method>
In an environment of 23°C, a carbon dioxide-fixing surface covering material attached to a SUS plate and CO₂ concentration meter are placed in a desiccator such that the carbon dioxide-fixing surface covering material does not contact an inner surface of the desiccator or the CO₂ concentration meter; after the desiccator is evacuated to -0.040 MPa, carbon dioxide gas cylinder is connected to the desiccator to inject CO₂ into the desiccator until internal pressure of the desiccator reaches 0.000 MPa; CO₂ concentration measured with the CO₂ concentration meter in the desiccator after 10 minutes from start of injection is defined as initial concentration; CO₂ concentration in the desiccator after 24 hours from measurement of the initial concentration is measured with the CO₂ concentration meter, and the amount of carbon dioxide absorbed per unit volume of the carbon dioxide-fixing surface covering material is calculated using equation (1) below: $\begin{matrix}Absorption amount per volume of carbon dioxide - \\ fixing surface covering material\end{matrix} = \frac{{PV}_{d}}{RT} \times Δ D \times 44 \times \frac{1}{{V}_{s}}$ (1)
where P is standard atmospheric pressure (101,325 Pa); Vd is volume of the desiccator (7 L); R is gas constant (8,310 Pa·L/(K·mol)); T is measurement temperature (296 K); ΔD is difference in concentration (vol%) between initial CO₂ concentration in the desiccator and CO₂ concentration in the desiccator after lapse of 24 hours; and Vs is volume (m³) of the carbon dioxide-fixing surface covering material placed in the desiccator.

3. The carbon dioxide-fixing surface covering material according to claim 1, wherein the pressure-sensitive adhesive layer comprises at least one carbon dioxide-fixing agent.

4. The carbon dioxide-fixing surface covering material according to claim 3, wherein the carbon dioxide-fixing agent is a basic compound.

5. The carbon dioxide-fixing surface covering material according to claim 3, wherein the carbon dioxide-fixing agent is a hydroxide of an alkaline earth metal.

6. The carbon dioxide-fixing surface covering material according to claim 3, wherein the carbon dioxide-fixing agent is calcium hydroxide.

7. The carbon dioxide-fixing surface covering material according to claim 1, wherein the pressure-sensitive adhesive layer has a thickness of 100 µm or more.

8. The carbon dioxide-fixing surface covering material according to claim 1, wherein the pressure-sensitive adhesive layer is formed of a photocurable resin.

9. The carbon dioxide-fixing surface covering material according to claim 1, wherein the pressure-sensitive adhesive layer is formed of an acrylic pressure-sensitive adhesive.

10. The carbon dioxide-fixing surface covering material according to claim 1, further comprising a substrate.

11. A surface coating method for a civil engineering structure or a building structure, comprising attaching the carbon dioxide-fixing surface covering material according to any one of claims 1 to 10 to a surface of the civil engineering structure or the building structure.

12. The surface coating method according to claim 11, further comprising attaching a substrate to a surface of the carbon dioxide-fixing surface covering material attached to the civil engineering structure or the building structure, the surface being opposite to a surface facing the civil engineering structure or the building structure.

13. A civil engineering structure comprising the carbon dioxide-fixing surface covering material according to any one of claims 1 to 10 attached thereto.

14. A building structure comprising the carbon dioxide-fixing surface covering material according to any one of claims 1 to 10 attached thereto.
